# EUROPÄISCHE PATENTSCHRIFT

(11) **EP 1 048 213 B1**
(45) Veröffentlichungstag und Bekanntmachung des Hinweises auf die Patenterteilung: **25.02.2004**
(21) Anmeldenummer: 00106361.9
(22) Anmeldetag: 24.03.2000
(51) Int. Cl.: A22C 11/02

(54) **Vorrichtung zum Befüllen von Därmen mit Wurstbrät**
Device for stuffing sausage meat
Machine de bourrage de saucisses

(30) Priorität: 26.04.1999 DE 19918711
(43) Veröffentlichungstag der Anmeldung: 02.11.2000
(73) Patentinhaber: VEMAG Maschinen- und Anlagenbau GmbH, 27283 Verden (DE)
(72) Erfinder: Zerbst, Oliver, 27283 Verden (DE); Meier, Dieter, 27308 Kirchlinteln (DE); Hiller, Klaus, 27313 Dörverden (DE)
(74) Vertreter: Eisenführ, Speiser & Partner

(56) Entgegenhaltungen:
- US-A- 3 553 768
- US-A- 3 922 364
- US-A- 4 646 386
- US-A- 4 820 470

## Beschreibung

Die Erfindung betrifft eine Vorrichtung zum Befüllen von Därmen o. dgl. Behälter mit pastöser Masse, insbesondere mit Wurstbrät oder anderen pastösen Lebensmitteln, mit einer Portioniereinrichtung , die einstellbare Portionen der Masse durch ein Füllrohr hindurch in einen Darm eines vorgegebenen Kalibers oder Kaliber-Gruppe abgibt, der seinerseits während des Befüllens und portionsweise aus einer Darmhaltevorrichtung abgezogen wird.

Vorrichtungen dieser Art sind seit langem bekannt. Sie werden in der Fleischwarenindustrie und in handwerklichen Metzgereibetrieben eingesetzt, um Würste der verschiedensten Rezepturen in Därme abzufüllen. So zeigt die US-PS-3,553,768 eine Vorrichtung, mit der Würste von sehr großem Kaliber (sehr großem Durchmesser) gefüllt und auf einen bestimmten Durchmesser gebracht werden können. Zu diesem Zweck ist im Anschluß an das Füllrohr und die mit diesem zusammen wirkende Darmhaltevorrichtung ein axial verschiebbarer Ring angeordnet. Die Wand des Ringes wird radial von einem Drucklufteinlass durchsetzt, durch den Druckluft in das Innere des Ringes gelangen kann. Durch diesen Ring ist die sich bildende Wurst geführt. Wenn deren Durchmesser groß genug ist, um den Lufteinlass zu verschließen, dann wird keine Luft in das Innere des Ringes einströmen können; die Wurst hat dann den gewünschten Durchmesser. Wenn jedoch der Darm von der sich bildenden Wurst zu schnell von dem Füllrohr abgezogen wird und die Wurst dadurch einen zu geringen Durchmesser hat, deckt sie die Lufteinlassöffnung des Ringes nicht ab, so dass Luft in den Zwischenraum zwischen Ring und Wurst einströmen kann. Diese Luftströmung wird dazu benutzt, einen Luftmotor so zu steuern, dass er den Ring gegen die Darmhaltevorrichtung verschiebt und deren Bremskraft dadurch vergrößert. Auf diese Weise wird nun weniger Darm von dem Füllrohr abgezogen, wodurch der Durchmesser der Wurst im Ring steigt, bis die Wurst die Lufteinlassöffnung wieder verschließt; die Wurst hat nun wieder den gewünschten Durchmesser. Für Wurstsorten mit kleinerem Durchmesser und insbesondere bei Verwendung von empfindlichem Darmmaterial, wie z. B. Naturdarm, kann der Durchmesser der Wurst auf diese Weise nicht genau genug oder gar nicht fixiert werden, zumal auch die Füllgeschwindigkeit bei kleineren Würsten regelmäßig sehr hoch ist und die Steuerung der Bremskraft der Darmhaltevorrichtung auf die bekannte Weise nicht genügend schnell reagieren kann.

Eine weitere bekannte Vorrichtung der obigen Art ist in der DE-OS-35 19 021 beschrieben. Bei der dortigen Vorrichtung ist die auf die Darmhaltevorrichtung ausgeübte Bremskraft zwar nicht verstellbar. Vielmehr wird dem Problem eines unerwünscht schnellen Abzuges des Darmes vom Füllrohr während des Füllens der Würste und dem damit verbundenen Problem unterschiedlicher Wurstdurchmesser dadurch begegnet, dass der als Bremsring ausgebildeten Darmhaltevorrichtung in Füllrichtung der Wurst ein Hilfsbremsring nachgeschaltet ist, der innen mit radial nach innen weisenden Rippen besetzt ist und dadurch die Bremskraft der normalen Darmhaltevorrichtung verstärkt. Dieser Hilfsbremsring ist als Rohr ausgeführt, damit sein freies Ende möglichst dicht an der Abdrehstelle für die Würste herangeführt werden kann. Wegen der baulichen Enge der Abdrehstelle ist hier also eine Ausführung des Hilfsbremsringes in der bekannten Ausführung mit großem Durchmesser nicht möglich. Die Konstanz des Durchmessers der Würste ist bei diesem Stand der Technik stark abhängig vom Darmmaterial und der Konsistenz des Brätes. Mit Schwankungen des Durchmessers muss deshalb jederzeit gerechnet werden. Problematisch ist diese bekannte Lösung auch deshalb, weil empfindliches Darmmaterial wegen der Spitzenbelastung im Bereich der Rippen des Hilfsbremsringes verhältnismäßig leicht beschädigt wird, was zu Ausschuss bei der Wurstherstellung führt.

Eine andere bekannte Vorrichtung ist der US-PS 5,013,279 zu entnehmen. Auch dort ist ein mit nach innen vorspringenden Rippen versehenes Bremsrohr vorgesehen, das im Wesentlichen der Formung der Würste in eine gekrümmte Form dient, das während des Füllens gedreht wird und aufgrund der Bremswirkung der Rippen erreicht, dass sich die Würste um die Achse des Bremsringes mitdrehen. Durchmesserschwankungen der Würste sind hier ebenso zu erwarten wie bei dem zuvor besprochenen Stand der Technik und die Gefahr der Beschädigung des Darmmaterials ist ähnlich groß.

Es ist inzwischen üblich geworden, bestimmte Wurstsorten, beispielsweise Rohwurst und Brühwurst, in Naturdärme abzufüllen, während eher dünnflüssige Sorten, wie zum Beispiel Leberwurst gern in Kunstdärme abgefüllt werden. Während die Durchmesser von Kunstdärmen regelmäßig mit sehr engen Toleranzen geliefert werden, trifft dies bei Naturdärmen nicht zu. Naturdärme werden deshalb sortiert nach Kaliber-Gruppen angeboten und verkauft, beispielsweise also Kaliber-Gruppen 18 - 20, 20 - 22, 22 - 24 etc. oder in Zwischengrößen. Die vorstehenden Zahlen sind die Durchmesser-Grenzwerte der Därme innerhalb der Kaliber-Gruppen.

Die Portioniereinrichtungen von Füllmaschinen sorgen dafür, daß die von den Füllmaschinen abgegebenen und in die Därme eingespritzten Brätmengen weitestgehend exakt gleich groß sind. Füllt man diese gleich großen Portionen nacheinander in den Naturdarm einer Kalibergruppe ab, so entstehen naturgemäß Würste unterschiedlicher Dicke und damit auch unterschiedlicher Länge, obwohl alle diese Würste das identische Brätvolumen beinhalten. Die Ursache ist, daß das sortiert eingesetzte Naturdarmmaterial innerhalb der Kalibergruppe noch um einige Millimeter Durchmesser schwankt. Beim Abfüllen einer Portion in einen Darm der an erster Stelle genannten Kalibergruppe mit einem Durchmesser von 20 mm erhält man folglich eine kürzere Wurst als beim Abfüllen derselben Portion in einen Naturdarm, der beispielsweise mit 18 mm an der Untergrenze der benutzten Kaliber-Gruppe rangiert.

Würste unterschiedlicher Länge bei gleichem Füllvolumen werden weder von den Verarbeitern noch von den Kunden gern gesehen. Die Kunden haben subjektiv den Eindruck, daß kurze Würste weniger Brät enthalten als längere Würste, denn die Kunden nehmen die geringen Durchmesserunterschiede nicht wahr. Bei den Verarbeitern besteht das Problem, daß die Verpackungen jeweils für die längste Wurst ausgelegt sein müssen und zusätzlich für die dickste Wurst einer Verpackungseinheit. Das bedeutet einen Mehraufwand an Verpackungsmaterial gegenüber einem Verpackungsgut identischer Längen und Durchmesser.

Der Erfindung lag somit die Aufgabe zugrunde, die einleitend aufgeführte Vorrichtung so weiterzuentwickeln, daß mit ihr Würste möglichst gleicher Länge und gleichen Volumens auch dann erzeugt werden können, wenn der eingesetzte Darm Kaliberschwankungen aufweist, wie es insbesondere bei Naturdarm regelmäßig der Fall ist. Dabei muss sichergestellt sein, dass der Naturdarm oder auch jeder andere empfindliche Kunstdarm während des Füllens nicht beschädigt wird und dass eine gegenüber dem Stand der Technik engere Schwankungsbreite von Durchmesser und Länge der Würste erreicht wird.

Während man bisher versuchte, die genannte Aufgabe durch manuelles Einwirken während des Spritzens der Würste zu lösen und dabei selbst beim Einsatz sehr qualifizierter Kräfte nur bescheidene Erfolge hatte und immer wieder durch das dabei nicht zu vermeidende Platzen der empfindlichen Naturdärme im Arbeitsablauf unterbrochen wurde, wird die Aufgabe mit einer Vorrichtung der eingangs genannten Art auf elegante Weise dadurch gelöst, daß anschließend an die Darmhaltevorrichtung und in deren Verlängerung ein Führungsrohr angeordnet ist, dessen Innendurchmesser etwa dieselbe Größe hat, wie der kleinste Außendurchmesser des vorgegebenen Kalibers bzw der vorgegebenen Kalibergruppe des Darmes, daß das Führungsrohr auf seiner Innen-Oberfläche eine Schicht eines Gleitmittels aufweist und daß der Darm während des Befüllens in das Führungsrohr hinein und durch dieses hindurch abgezogen wird.

Der Vorteil der patentgemäßen Lösung besteht darin, daß die gut geschulten Kräfte nun an anderer wichtiger Stelle eingesetzt werden können, daß das Abfüllen vereinfacht und die Qualität des Produktes im Sinne der Aufgabe auf einen sehr hohen und gleichbleibenden Stand bei sehr geringer Störanfälligkeit gebracht wird.

Weitere Ausgestaltungen der Erfindung sind in den Unteransprüchen angegeben. Hiervon hervorzuheben ist die Ausführung, bei der das Führungsrohr etwa 2/3 der Länge einer Wurst hat und in mehrfacher Hinsicht vorteilhaft ist die bevorzugte Ausführungsform, bei der das Gleitmittel im Führungsrohr aus einer Wasserschicht besteht, welches in das Innere des Führungsrohres durch Düsen dosiert zugeführt wird, deren Öffnungen sich im Inneren des Führungsrohres befinden, dabei kann vorgesehen sein, daß Düsen nicht nur sternförmig über den Umfang des Führungsrohres in der Nähe der Darmhaltevorrichtung verteilt sind. Es kann durchaus vorteilhaft sein, auch in axialer Richtung des Führungsrohres Düsen zu verteilen.

Es hat sich gezeigt, daß die Verwendung von Wasser als Gleitmittel zu einem sehr störungsarmen und qualitativ hochwertigen Arbeiten führt. Ein zusätzlicher Vorteil ergibt sich bei der Verwendung von Wasser als Gleitmittel dadurch, daß das Wasser auch reinigend wirkt und im Anschluß an das Abfüllen beim Einsatz größerer Wassermengen und -drücke auch zum Reinigen der Vorrichtung benutzt werden kann.

Mit von Vorteil ist weiterhin am Auslauf des Führungsrohres ein Gegenhalteelement vorgesehen, das in der Praxis bevorzugt durch eine oder zwei Rollen realisiert wird, deren Drehachse senkrecht zur Längsachse des Führungsrohres verläuft und deren Oberfläche etwas in den Querschnitt des Führungsrohres hineinragt, so daß auf den Darm gegen Ende des Füllens ein Gegendruck wirkt, der die Qualität des Produktes positiv beeinflußt.

Die Erfindung ist nachstehend unter Bezugnahme auf die beigefügten Zeichnungen anhand zweier Ausführungsbeispiele näher erläutert. In den Zeichnungen zeigen
- Fig. 1: eine Seitenansicht einer herkömmlichen Füllmaschine, die erfindungsgemäß erweitert wurde;
- Fig. 2: einen Längsschnitt durch ein Führungsrohr, welches an eine Ausführungsform einer Darmbremse adaptiert ist;
- Fig. 3: einen Längsschnitt durch ein Führungsrohr für eine andere Ausführung einer Darmbremse;
- Fig. 4: eine Stirnansicht auf das Führungsrohr gemäß Fig. 2 oder 3 zur Verdeutlichung der Anordnung des Gegenhalteelements;
- Fig. 5: einen der Fig. 2 ähnlichen Längsschnitt durch ein Führungsrohr mit einer abgewandelten Form des Gegenhalteelements und
- Fig. 6: eine Stirnansicht auf das Gegenhalteelement der Fig. 5.

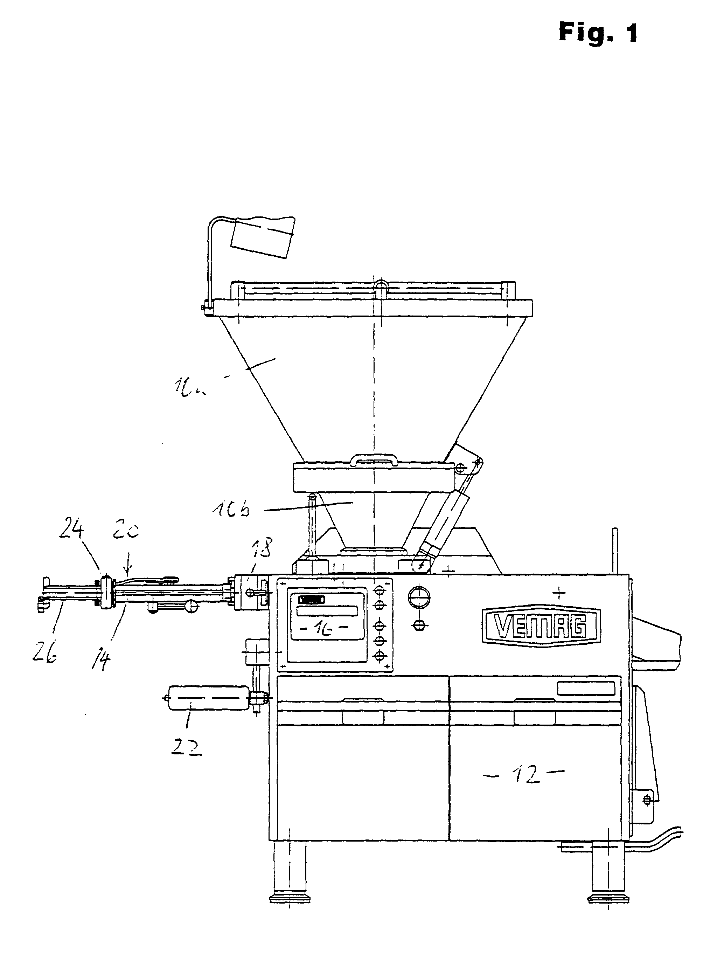

Die Füllmaschine gemäß Fig. 1 ist von herkömmlicher Bauart. Sie weist einen herkömmlich geteilten Vorratsbehälter 10a, 10b auf, in den das zu verarbeitende Brät von oben eingefüllt wird. Unterhalb des Vorratsbehälters befindet sich innerhalb eines Maschinengestells 12 eine nicht dargestellte Förderpumpe, die das aus dem Vorratsbehälter 10 zuströmende Brät unter Druck und portionsweise in ein Füllrohr 14 fördert, welches im Ausführungsbeispiel als Abdrehrohr ausgebildet ist.

Zur Erzeugung der Brätportionen ist eine Steuerelektronik 16 vorgesehen. Diese ermöglicht es dem Bediener, Portionen unterschiedlicher Größe vorzugeben. Die Vorgaben werden von der Steuerelektronik 16 in Steuerbefehle beispielsweise für die Förderpumpe umgewandelt, so daß die Füllmaschine am Ausgang des Füllrohres 14 exakt portionierte Volumina an Brät in einer vergleichsweise hohen Frequenz abgibt.

Weiterhin weist die Füllmaschine des Ausführungsbeispiels ein herkömmliches Abdrehgetriebe 18 auf, ist mit einer Längenportioniereinrichtung 20 versehen und besitzt einen Steuerschalter 22 im Bereich des Füllrohres 14. Dieser Steuerschalter wird von der Bedienungsperson mit dem Körper betätigt, wenn der Prozeß des Abfüllens bzw. des Spritzens des Brätes beginnen bzw. enden soll.

An dem in Förderrichtung hinteren Ende des Füllrohres 14 befindet sich zunächst eine herkömmliche Darmbremse. Sie dient dazu, den im gerafften Zustand auf das Füllrohr 14 aufgeschobenen Darm während des beim Befüllen stattfindenden Abziehens des Darmes vom Füllrohr hinreichend abzubremsen.

Die insoweit beschriebene Maschine gehört zum Stand der Technik.

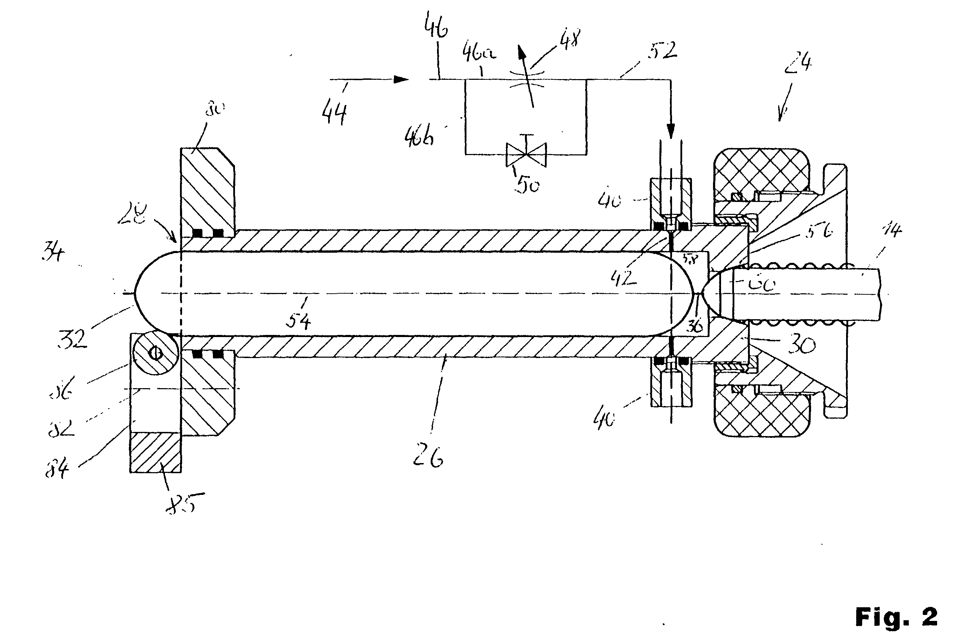

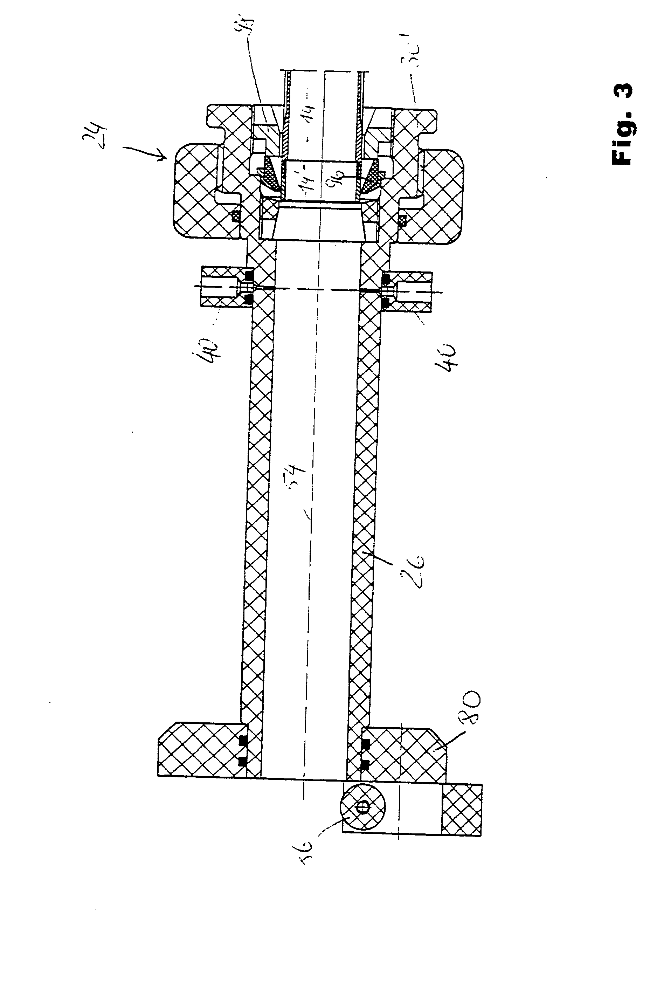

Angrenzend an Füllrohr 15 und Darmbremse 24 weist die Maschine gemäß Fig. 1 ein koaxial zum Füllrohr 14 ausgerichtetes Führungsrohr 26 auf. Es ist in den Figuren 2 und 3 vergrößert dargestellt und nimmt im Ausführungsbeispiel während des Abfüllens jeweils einer Portion die sich bildende Wurst auf und begrenzt - was bei Naturdärmen besonders wichtig und vorteilhaft ist - die radiale Ausdehnung der entstehenden Würste auf den Führungsrohr-Innendurchmesser.

In dem in Fig. 2 gezeigten Ausführungsbeispiel weist das Führungsrohr 26 gegenüber seinem offenen Ende 28 ein Einlaßende 30 auf. Die Innenoberfläche des Führungsrohres ist bevorzugt möglichst glatt und entgegen dem Stand der Technik also frei von radial nach innen ragenden Rippen. Innerhalb des Führungsrohres 26 ist in Fig. 2 eine gerade fertiggestellte Wurst 32 zu erkennen, die an ihrem vorlaufenden Ende eine Abdrehstelle 34 und an ihrem rückwärtigen Ende eine Abdrehstelle 36 aufweist. Der Innendurchmesser des Führungsrohres 26 ist gleich dem Solldurchmesser aller gefertigten Würste 32; dieser Innendurchmesser ist gleich dem kleinsten Außendurchmesser der gerade verwendeten Kaliber-Gruppe des eingesetzen Naturdarms, beispielsweise also 18 Millimeter für die Kaliber-Gruppe 18 - 22.

Unmittelbar angrenzend an das Einlaßende 30 des Führungsrohres 26 befinden sich eine Anzahl von Düsen 40. Sie sind an der in Fig. 2 eingezeichneten Position sternförmig um das Führungsrohr 26 herum verteilt angeordnet und weisen Düsenbohrungen 42 auf, die die Wandung radial von außen nach innen gerichtet durchsetzen. Bei Führungsrohren 26 für kleinere Kaliber-Gruppen werden 4 - 6 dieser Düsen 40 ausreichen, während bei größeren Kalibern auch eine größere Zahl von Düsen vorgesehen werden können.

Von einer nicht dargestellten Quelle strömt in Richtung des gezeigten Pfeiles 44 Wasser in eine Leitung 46 hinein. Die Leitung 46 verzweigt sich in eine Leitung 46a und eine zweite Leitung 46b. Die Leitung 46a führt zu einem Feinregulierventil 48, welches eine genaue Dosierung der durchströmenden Wassermenge ermöglicht. Über die Leitung 46b parallel geschaltet zum Feinregulierventil 48 ist ein Schnellventil 50. Die Ausgänge der beiden Ventile 48, 50 sind zusammengeführt in eine Leitung 52, die ihrerseits in nicht dargestellter Weise mit den Einlässen der Düsen 40 verbunden ist. Diese können deshalb entweder mit einer genau dosierten kleinen oder aber einer großen Wassermenge versorgt werden. Nicht dargestellt ist eine Einrichtung, mit der man das Wasser mit einem einstellbaren Takt durch die Düsen 40 hindurch in den Innenraum des Führungsrohres 26 einspritzen bzw. einlaufen lassen kann.

Das Einlaßende 30 des Führungsrohres 26 gemäß Fig. 2 weist einen in der Achse 54 des Führungs- und des Füllrohres 26, 14 liegenden zweistufigen Durchbruch auf. Von außen nach innen betrachtet besteht dieser Durchbruch zunächst aus einem sich kegelförmig verjüngenden Abschnitt 56 und einem hieran anschließenden zylindrischen Abschnitt 58. Das Füllrohr 14, bei dem es sich hier um ein Abdrehrohr handelt, welches von dem in Fig. 1 gezeichneten Abdrehgetriebe 18 um seine Achse gedreht werden kann, weist an seinem in der Zeichnung linken freien Ende auf seinem Umfang einen Kunststoff-Ring 60 auf. Das Füllrohr 14 ist soweit in den Durchbruch des Einlaßendes 30 des Führungsrohres 26 eingeschoben und die relativen Durchmesser sind so gewählt, daß der Ring 60 im Betriebszustand innerhalb des kegelförmigen Bereiches 56 liegt und dessen Innenwand fast berührt.

In der Zeichnung angedeutet, ist ein zu einer Raupe zusammengeraffter und auf das Füllrohr 14 aufgeschobener Darm 62. Dieser Darm ist über den Ring 60 hinweg bis jenseits des freien Endes des Füllrohres 14 geführt und dort mittels der eingezeichneten Abdrehstelle 36 verschlossen. Das Einlaßende 30 bildet somit im Bereich des kegelförmigen Abschnittes 56 des Durchbruches und dem Füllrohr 14 mit dessen Kunststoff-Ring 60 die für das portionierte Füllen wichtige Darmbremse 24.

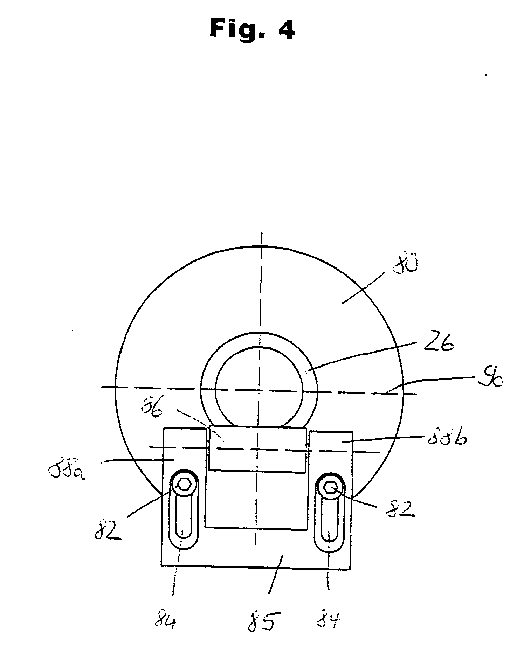

Im Bereich des offenen Endes 28 des Führungsrohres 26 ist eine Halterung 80 unverdrehbar angebracht, die das offene Ende 28 des Führungsrohres 26 ringförmig umgibt. An dieser Halterung 80 ist mittels zweier Schrauben 82 und von diesen durchsetzter Langlöcher 84 ein Lagerbock 85 verstellbar befestigt. Der Lagerbock trägt eine Rolle 86 in seinen beiden Schenkeln 88a, 88b. Die Drehachse der Rolle 86 verläuft parallel zu einer in Fig. 4 eingezeichneten Horizontalebene 90 und die vertikale Lage der Rolle 86 ist so eingestellt, daß der Abstand ihres Umfanges von der Achse 54 des Führungsrohres 26 kleiner als der Innenradius des Führungsrohres 26 ist. Auf diese Weise ragt die Rolle 86 in einem einstellbaren Maße in den Weg jeder durch das Führungsrohr 26 hindurch bewegten Wurst 32 hinein, wie man in Fig. 2 gut erkennen kann. Die Rolle 86 bewirkt auf diese Weise das Entstehen eines Gegendruckes auf die Wurst beim Ende eines Füllvorganges und dem anschließenden Abdrehen zur Bildung der Abdrehstelle 36. Bei Verwendung von zwei Rollen 86 an der Halterung 80 sind diese beispielsweise in separaten Lagerböcken spiegelbildlich zu der Horizontalebene 90 angeordnet.

Zum Arbeiten mit der erfindungsgemäßen Vorrichtung wird zunächst in üblicher Weise eine Raupe mit gerafftem Darm 62 auf das Führungsrohr 14 aufgeschoben und das in Fig. 2 linke Ende des Darms 62 verschlossen. Dieses verschlossene Ende wird dann zusammen mit dem Füllrohr 14 soweit in das Einlaßende 30 des Führungsrohres 26 hineingeschoben, daß der Ring 60 mittels des über ihn hinweggeführten Darms 62 eine gewisse Kraft auf den kegelförmigen Abschnitt 56 des Einlaßendes 30 ausübt und das Abziehen des Darmes bremst.

Nun wird eine erste Portion Wurstbrät von der Füllmaschine durch das Füllrohr 14 hindurch in das verschlossene Ende des Darmes hineingedrückt bzw. -gespritzt. Spätestens zu diesem Zeitpunkt wird auch das Feinregulierventil 48 in dem erforderlichen Maße geöffnet, so daß eine kleine Wassermenge in den Innenraum des Führungsrohres 26 hineingelangt. Dort entsteht beginnend mit dem Einlaßende 30 eine dünne Wasserschicht am Innenumfang des Führungsrohres 26 gegen die der sich füllende Darm von dem Brätdruck gepreßt wird und die als Gleitschicht für die Bewegung des Darmes durch das Führungsrohr durch bis dessen offenem Ende wirkt.

Die Dicke der Wasserschicht läßt sich mit Hilfe des Feinregulierventils 48 einstellen, und wenn einmal während des Arbeitens wider Erwarten doch ein Darmstück platzen sollte, dann läßt sich das Führungsrohr 26 ohne Zeitverlust durch Öffnen des Schnellventils 50 rasch und wirkungsvoll durchspülen und reinigen, so daß die Arbeit keine nennenswerte Unterbrechung erfährt.

In Fig. 3 ist eine Vorrichtung gezeigt, die sich von derjenigen gemäß Fig. 2 nur im Bereich der Darmbremse 24 unterscheidet. Wie man erkennen kann, ist das Einlaufende 30' des Füllrohres in diesem Fall treppenförmig aufgeweitet. Die eigentliche Darmbremse wird hier von einer Bremslippe 96 gebildet, die auf dem nicht dargestellten Darm im Bereich des vorderen Endes 14' des Füllrohres 14 einwirkt. Mittels eines in das Einlaßende 30' des Füllrohres 26 einschraubbaren Spannringes 98 ist die Andrückkraft der Bremslippe 96 einstellbar. Die Funktion der Vorrichtung gemäß Fig. 3 gleicht - abgesehen von der Darmbremse 24 - derjenigen, die im Zusammenhang mit Fig. 2 beschrieben wurde.

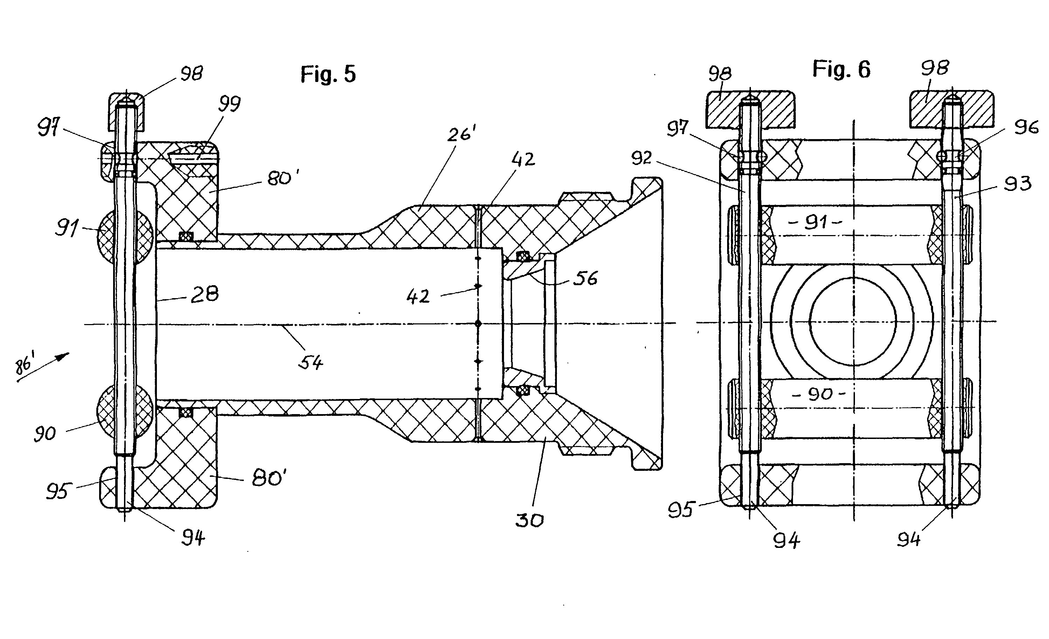

Das in Fig. 5 gezeigte Führungsrohr 26' unterscheidet sich im Grundsatz nicht von den zuvor erläuterten Ausführungsformen. Insbesondere weist es in seinem Einlassbereich 30 wiederum den sich kegelförmig verjüngenden Abschnitt 56 auf, der im Ausführungsbeispiel gemäß Fig. 5 und im Gegensatz zu der Ausführung gemäß Fig. 2 Bestandteil eines Einsatzes in das Füllrohr 26' ist. Weiterhin sind die Düsenbohrungen 42 zu erkennen sowie ein Gegenhalteelement 86' am offenen Ende 28 des Füllrohres 26'.

Das Gegenhalteelement 86' weist in der Ausführung gemäß den Figuren 5 und 6 zwei walzenförmige Gleitstücke 90, 91 auf; sie sind parallel zueinander und mit einem variablen Abstand voneinander - in Förderrichtung der Würste unmittelbar nach dem offenen Ende des Füllrohr 26' angeordnet und können so zueinander und zum Führungsrohr 26' eingestellt werden, dass ihr lichter Abstand voneinander kleiner als der lichte Durchmesser des Führungsrohres 26' ist. Eine in Fig. 5 von rechts nach links sich füllende und vom Fülldruck transportierte Wurst wird sich mit Ihrem vorlaufenden Ende einstellungsabhängig mehr oder weniger stark an den Gleitstücken 90, 91 abstützen und diese erst bei Erreichen eines bestimmten Gegendruckes passieren.

Um den Gegendruck bedarfsgerecht einstellen zu können, ist der Abstand der beiden parallelen Gleitstücke 90, 91 - wie schon ausgeführt - verstellbar. Zum Zwecke der Verstellung weisen die walzenförmigen Gleitstücke jeweils zwei parallele und die Mittelachse der Gleitstücke durchsetzende Gewindebohrungen auf, deren Abstand größer ist als der Innendurchmesser des Füllrohrs 26'ist. Durch die insgesamt vier Gewindebohrungen der Gleitstücke 90, 91 sind ausweislich der Figuren 5 und - insbesondere - 6 zwei Stellschrauben 92, 93 hindurchgeführt, so dass jeweils eine Stellschraube 92 die in Fig. 6 am linken Ende der Gleitstücke 90, 91 befindlichen Gewindebohrungen und die andere Stellschraube 93, die in Fig. 6 der rechtsbefindlichen beiden Gewindebohrungen der Gleitstücke 90, 91 durchsetzt. Der Drehsinn der Gewinde in den Bohrungen des einen Gleitstücks ist entgegengesetzt dem Drehsinn des Gewindes im anderen Gleitstück. Somit haben die Gewindebohrungen des Gleitstücks 90 beispielsweise ein Rechtsgewinde und die Gewindebohrungen des Gleitstücks 91 demgemäß Linksgewinde.

Jede Stellschraube weist an ihrem freien Ende einen zylindrischen glatten Abschnitt 94 auf und ist mit diesem glatten Abschnitt in je eine zylindrische Bohrung 95 einer Halterung 80' eingesteckt, die ihrerseits in der schon im Zusammenhang mit den Figuren 2 und 3 beschriebenen Weise das offene Ende 28 des Führungsrohres 26' umgibt. Kurz vor dem jeweils anderen Ende weist jede Stellschraube eine Ringnut 96 auf. In ihrem dem glatten Abschnitt 94 gegenüberliegenden Endbereich ist jede Stellschraube 92, 93 durch eine Bohrung 97 der Halterung 80' geführt, und die axiale Lage der Ringnut 96 der Stellschraube ist so gewählt, dass sich die Ringnut innerhalb der Bohrung 97 der Halterung 80 befindet. Der Bereich der Stellschrauben 92, 93 zwischen dem glatten Abschnitt 94 und der Ringnut 96 ist mit je zwei Gewindeabschnitten versehen, die in die Gewinde der Gewindebohrungen der Gleitstücke 90, 91 eingreifen. Schließlich ist an dem dem glatten Abschnitt 94 gegenüberliegenden Ende jeder Stellschraube eine Flügelmutter 98 befestigt, mit der die Stellschraube manuell verdreht werden kann. Die beiden Gewindeabschnitte jeder Stellschraube haben gegensinnige Drehrichtungen entsprechend den Gewindebohrungen der Gleitstücke.

In die Halterung 80' sind zwei beabstandete Bohrungen 99 eingebracht, deren parallele Achsen ihrerseits parallel zur Achse 54 des Führungsrohres 26' verlaufen. Die Lage der Bohrungen 99 ist so gewählt, dass sie jeweils eine der beiden schon erwähnten Bohrungen 97 schneiden und ein in jede Bohrung 99 eingesteckter und in der Zeichnung nicht erkennbare Zylinderstift in die jeweilige Ringnut 97 einer der beiden Stellschrauben eingreift. Dies hat zur Folge, dass jede Stellschraube axial unverschiebbar, jedoch verdrehbar in der Halterung 80' festgelegt ist. Dreht man nun an den beiden Flügelmuttern 98 der beiden Stellschrauben 92, 93 so bewirken die erwähnten Gewindeabschnitte der Stellschrauben, dass sich die walzenförmigen Gleitstücke entlang der Stellschrauben und symmetrisch zur Achse 54 des Führungsrohres 26' aufeinander zu- oder voneinander wegbewegen.

Somit läßt sich mit den Stellschrauben der lichte Abstand zwischen den beiden Gleitstücken einstellen und die jeweils gewünschte Gegenkraft auf die Wurst verändern.

In einer nicht dargestellten Ausführungsform des Gegenhalteelementes befindet sich dieses nicht ausserhalb, sondern in der Nähe des offenen Endes 28 innerhalb des Führungsrohres und ist so ausgebildet, dass der Querschnitt des Führungsrohres zur Erzeugung des Gegendruckes am offenen Ende 28 verstellbar ist.

Schließlich sei angemerkt, dass das Gegenhalteelement für Anwendungsfälle, in denen ein Wechsel der Rezepturen, der Konsistenz des Wurstbrätes und des Darmmaterials vom Benutzer der Vorrichtung nicht benötigt wird, auch unverstellbar für einen vorgegebenen Gegendruck ausgebildet sein kann.

In einer nicht dargestellten Ausführungsform ist vorgesehen, daß das Abteilen der einzelnen Würste voneinander nicht durch Abdrehen gemäß der dargestellten Ausführungsbeispiele, sondern durch Klippen geschieht. Eine weitere alternative Ausführung sieht vor, daß zum Abdrehen nicht das Füllrohr 14 benutzt wird, sondern daß das Führungsrohr 26 an einen Drehantrieb angeschlossen ist.

Als Gleitmittel ist bei den beiden Ausführungsbeispielen Wasser vorgesehen, das sich in der Praxis für diesen Zweck gut bewährt hat. Alternativ wird jedoch vorgeschlagen ein dünnflüssiges Lebensmittelfett anstelle des Wassers zu verwenden oder aber das Führungsrohr 26 mit einer festen Gleitmittelschicht in seinem Innenraum zu versehen, beispielsweise aus Teflon.

## Patentansprüche

1. Vorrichtung zum Befüllen von Därmen o. dgl. Behälter mit pastöser Masse, insbesondere mit Wurstbrät oder anderen pastösen Lebensmitteln, mit einer Portioniereinrichtung (16), die einstellbare Portionen der Masse durch ein Füllrohr (14) hindurch in einen Darm (62) eines vorgegebenen Kalibers oder Kaliber-Gruppe abgibt, der seinerseits während des Befüllens und portionsweise aus einer Darmabziehvorrichtung (24) abgezogen wird, **dadurch gekennzeichnet, dass** anschließend an die Darmabziehvorrichtung (24) und in deren Verlängerung ein Führungsrohr (26) angeordnet ist, dessen Innendurchmesser etwa dieselbe Größe hat, wie der kleinste Außendurchmesser des vorgegebenen Kalibers bzw. der vorgegebenen Kaliber-Gruppe des Darmes, dass das Führungsrohr auf seiner Innen-Oberfläche eine Schicht eines Gleitmittels aufweist und dass der Darm während des Befüllens in das Führungsrohr hinein und durch dieses hindurch abgezogen wird.

2. Vorrichtung nach Anspruch 1, **dadurch gekennzeichnet,**
**daß** das Führungsrohr (26) über seine Länge hinweg einen im wesentlichen konstanten Innendurchmesser aufweist.

3. Vorrichtung nach Anspruch 1 oder 2, **dadurch gekennzeichnet,**
**daß** das Führungsrohr (26) eine Länge hat, die mindestens etwa der halben Länge einer abgefüllten Wurst oder dergleichen entspricht.

4. Vorrichtung nach Anspruch 3, **dadurch gekennzeichnet,**
**daß** die Länge des Führungsrohres (26) etwa der vollen Länge einer Wurst entspricht.

5. Vorrichtung nach einem der Ansprüche 1 - 4, **dadurch gekennzeichnet,**
**daß** die im Führungsrohr (26) befindliche Schicht als Gleitmittel von einer Teflon-Schicht gebildet ist.

6. Vorrichtung nach einem der Ansprüche 1 - 4, **dadurch gekennzeichnet,**
**daß** das Gleitmittel flüssig ist und die Flüssigkeit die Innenoberfläche des Führungsrohres (26) zumindest teilweise bedeckt.

7. Vorrichtung nach einem der Ansprüche 1 - 6,
**dadurch gekennzeichnet, daß** das Gleitmittel im Führungsrohr (26) aus einer Wasserschicht besteht.

8. Vorrichtung nach Anspruch 6, **dadurch gekennzeichnet,**
**daß** dem Führungsrohr (26) im Bereich seines der Darmabziehvorrichtung (24) benachbarten Endes Düsen (40) vorgesehen sind, durch die das Gleitmittel in das Innere des Führungsrohres eingegeben wird.

9. Vorrichtung nach Anspruch 7, **dadurch gekennzeichnet,**
**daß** mehrere Düsen (40) über den Umfang des Führungsrohres (26) herum verteilt sind und die Düsenbohrungen die Wand des Führungsrohres durchsetzen.

10. Vorrichtung nach einem der Ansprüche 6 - 9, **dadurch gekennzeichnet, daß** um das Führungsrohr (26) herum und angrenzend an sein der Darmabziehvorrichtung (24) benachbartes Ende (30) ein Verteilerring für das flüssige Gleitmittel angeordnet ist und Bohrungen (42) das Innere des Verteilerringes mit dem Inneren des Führungsrohres verbinden.

11. Vorrichtung mindestens nach Anspruch 6 mit einer Einrichtung zur Mengensteuerung des in den Innenraum des Führungsrohres (26) gelangenden flüssigen Gleitmittels.

12. Vorrichtung nach Anspruch 11, **dadurch gekennzeichnet,**
**daß** zum Einstellen der eingeleiteten Gleitmittelmenge ein Feinregulierventil (48) vorgesehen und den Düsen (40) in Strömungsrichtung vorgeschaltet ist.

13. Vorrichtung nach Anspruch 12, **dadurch gekennzeichnet, daß** dem Feinregulierventil (48) ein Schnellventil (50) parallel geschaltet ist.

14. Vorrichtung mindestens nach Anspruch 6, **dadurch gekennzeichnet,**
**daß** das flüssige Gleitmittel getacktet in den Innenraum des Führungsrohres (26) eingeleitet wird.

15. Vorrichtung nach einem der Ansprüche 1 - 14, **dadurch gekennzeichnet,**
**daß** im Bewegungspfad des sich füllenden oder gefüllten Darmes (62) ein Gegenhalteelement (Rolle 86) vorgesehen ist, welches eine dem Füllvorgang entgegen gerichtete Bremskraft auf den sich füllenden oder gefüllten Darm ausübt.

16. Vorrichtung nach Anspruch 15, **dadurch gekennzeichnet,**
**daß** das Gegenhalteelement (86), mit Bezug auf das Führungsrohr (26) radial derart verstellbar ist, daß der lichte Abstand zwischen seiner Oberfläche und der Mittelachse (54) des Führungsrohres (26) geringer ist als der Innenradius des Führungsrohres.

17. Vorrichtung nach einem der Ansprüche 15 oder 16, **dadurch gekennzeichnet,**
**daß** sich das Gegenhalteelement unmittelbar anschließend an das in Füllrichtung freie Ende (28) des Führungsrohres (26) befindet.

18. Vorrichtung nach einem der Ansprüche 1 - 17, **dadurch gekennzeichnet,**
**daß** die Darmabziehvorrichtung (24) eine an sich bekannte Darmbremse aufweist und daß das der Darmabziehvorrichtung zugekehrte Ende (30) des Führungsrohres als Teil der Darmbremse ausgebildet ist.

19. Vorrichtung nach einem der Ansprüche 1 - 18, **gekennzeichnet durch**
eine Darmabdreh- oder Klippvorrichtung an dem der Darmabziehvorrichtung benachbarten Ende des Führungsrohres (26).

20. Vorrichtung nach einem der Ansprüche 1 - 18, **dadurch gekennzeichnet,**
**daß** das Führungsrohr (26) um seine Längsachse drehbar angeordnet und mit einem gesteuerten Drehantrieb zur Bildung einer Abdreheinrichtung versehen ist.

## Claims

1. Arrangement for filling casings or like containers with pasty material, and in particular with sausage meat or other pasty foodstuffs, having a portioning means (16) which dispenses adjustable portions of the material through a filling tube (14) into a casing (62) of a preset calibre or group of calibres, which casing (62) is drawn off in turn from a casing draw-off device (24), portion by portion, during the filling, **characterised in that** there is arranged, continuing on from the casing draw-off device (24) and forming an extension thereof, a guide tube (26) whose inside diameter is approximately the same size as the smallest outside diameter of the preset casing calibre or group of casing calibres, **in that** the guide tube has a layer of lubricant on its inside surface, and **in that** the casing is drawn off into the guide tube and through the same during the filling.

2. Arrangement according to claim 1, **characterised in that** the guide tube (26) is of substantially constant inside diameter throughout its length.

3. Arrangement according to claim 1 or 2, **characterised in that** the guide tube (26) is of a length corresponding to at least half the length of a filled sausage or the like.

4. Arrangement according to claim 3, **characterised in that** the length of the guide tube (26) corresponds to approximately the full length of a sausage.

5. Arrangement according to one of claims 1 - 4, **characterised in that** the layer which is present in the guide tube (26) as a lubricant is a layer of Teflon.

6. Arrangement according to one of claims 1 - 4, **characterised in that** the lubricant is liquid and the liquid at least partly covers the inside surface of the guide tube (26).

7. Arrangement according to one of claims 1 - 6, **characterised in that** the lubricant in the guide tube (26) comprises a layer of water.

8. Arrangement according to claim 6, **characterised in that** the guide tube (26) is provided, in the region of its end adjacent the casing draw-off device (24), with nozzles (40) through which the lubricant is dispensed into the interior of the guide tube.

9. Arrangement according to claim 7, **characterised in that** a plurality of nozzles (40) are distributed around the circumference of the guide tube (26) and the bores of the nozzles pass through the wall of the guide tube.

10. Arrangement according to one of claims 6 - 9, **characterised in that** a distributor ring for the liquid lubricant is arranged around the guide tube (26) and adjoining its end (30) adjacent the casing draw-off device (24), and bores (42) connect the interior of the distributor ring to the interior of the guide tube.

11. Arrangement according to at least claim 6, having a means for controlling the quantity of liquid lubricant which makes its ways into the space inside the guide tube (26).

12. Arrangement according to claim 11, **characterised in that** a precision regulating valve (48) is provided to allow the amount of lubricant introduced to be set, and is connected upstream of the nozzles (40) in the direction of flow.

13. Arrangement according to claim 12, **characterised in that** a fast-acting valve (50) is connected in parallel with the precision regulating valve (48).

14. Arrangement according to claim 6, **characterised in that** the liquid lubricant is introduced into the space inside the guide tube (26) in a timed manner.

15. Arrangement according to one of claims 1 - 14, **characterised in that** there is provided, on the path of movement of the filling or filled casing (62), a restraining member (roller 86) which exerts a braking force, directed in the opposite direction to the filling process, on the filling or.filled casing.

16. Arrangement according to claim 15, **characterised in that** the restraining member (86) is radially adjustable relative to the guide tube (26) in such a way that the clear distance between its surface and the centre axis (54) of the guide tube (26) is less than the inside radius of the guide tube.

17. Arrangement according to either of claims 15 and 16, **characterised in that** the restraining member is positioned to follow on directly from that end (28) of the guide tube (26) which is free in the filling direction.

18. Arrangement according to one of claims 1 - 17, **characterised in that** the casing draw-off device (24) has a casing brake which is known per se, and **in that** that end (30) of the guide tube which is adjacent the casing draw-off device forms part of the casing brake.

19. Arrangement according to one of claims 1 - 18, **characterised by** a casing twist-off device or clipping device at that end of the guide tube (26) which is adjacent the casing draw-off device.

20. Arrangement according to one of claims 1 - 18, **characterised in that** the guide tube (26) is arranged to be rotatable about its longitudinal axis and is provided with a controlled rotary drive to form a twist-off means.

## Revendications

1. Dispositif destiné au remplissage de boyaux ou enveloppes similaires avec une substance pâteuse, en particulier avec de la chair à saucisses ou autres produits alimentaires pâteux, comprenant un portionneur (16), par lequel des portions réglables de substance sont refoulées à travers un tube de bourrage (14) dans un boyau (62) avec un calibre prédéfini ou un groupe de calibre prédéfini, qui, pour sa part, est tiré pendant le remplissage et portion par portion hors d'un dispositif de tirage du boyau (24), **caractérisé en ce que**, dans le prolongement en aval du dispositif de tirage du boyau (24), est agencé un tube de guidage (26), dont le diamètre intérieur est pratiquement égal au plus petit diamètre extérieur du calibre prédéfini ou du groupe de calibre prédéfini pour le boyau, **en ce que** le tube de guidage (26) est revêtu sur sa surface intérieure d'une couche d'agent antifriction et **en ce que** le boyau pendant le remplissage est tiré à l'intérieur du tube de guidage (26) et à travers celui-ci.

2. Dispositif selon la revendication 1, **caractérisé en ce que** le tube de guidage (26) a un diamètre intérieur sensiblement constant sur toute sa longueur.

3. Dispositif selon la revendication 1 ou 2, **caractérisé en ce que** le tube de guidage (26) a une longueur égale au moins pratiquement à la moitié de la longueur d'une saucisse remplie ou produit similaire.

4. Dispositif selon la revendication 3, **caractérisé en ce que** la longueur du tube de guidage (26) est égale pratiquement à toute la longueur d'une saucisse.

5. Dispositif selon l'une quelconque des revendications 1 à 4, **caractérisé en ce que** la couche d'agent antifriction déposée à l'intérieur du tube de guidage (26) est formée par une couche de téflon.

6. Dispositif selon l'une quelconque des revendications 1 à 4, **caractérisé en ce que** l'agent antifriction est liquide et le liquide recouvre au moins partiellement la surface intérieure du tube de guidage (26).

7. Dispositif selon l'une quelconque des revendications 1 à 6, **caractérisé en ce que** l'agent antifriction à l'intérieur du tube de guidage (26) est formé par une couche d'eau.

8. Dispositif selon la revendication 6, **caractérisé en ce qu'**au niveau de l'extrémité du tube de guidage (26), à proximité du dispositif de tirage du boyau (24), sont prévues des buses (40) au moyen desquelles l'agent antifriction est introduit à l'intérieur du tube de guidage (26).

9. Dispositif selon la revendication 7, **caractérisé en ce que** plusieurs buses (40) sont réparties sur le pourtour du tube de guidage (26) et les forures de projection sont réalisées à travers la paroi du tube de guidage (26).

10. Dispositif selon l'une quelconque des revendications 6 à 9, **caractérisé en ce que**, autour du tube de guidage (26) et au niveau de son extrémité contiguë au dispositif de tirage du boyau (24), est agencée une bague de distribution de l'agent antifriction liquide et des forures (42) font communiquer l'intérieur de la bague de distribution avec l'intérieur du tube de guidage (26).

11. Dispositif au moins selon la revendication 6, comprenant un dispositif de commande de la quantité d'agent antifriction liquide parvenant dans le volume intérieur du tube de guidage (26).

12. Dispositif selon la revendication 11, .**caractérisé en ce que**, pour le réglage de la quantité d'agent antifriction introduite, il est prévu une vanne de régulation à haute précision (48), qui est montée en amont des buses (40) par référence au sens du flux..

13. Dispositif selon la revendication 12, **caractérisé en ce qu'**une vanne à action rapide (50) est montée en parallèle avec la vanne de régulation à haute précision (48).

14. Dispositif au moins selon la revendication 6, **caractérisé en ce que** l'agent antifriction liquide est introduit de manière cadencée dans le volume intérieur du tube de guidage (26).

15. Dispositif selon l'une quelconque des revendications 1 à 14, **caractérisé en ce que**, dans la trajectoire du boyau (62) en cours de remplissage ou rempli, il est prévu un élément de support (galet 86), qui exerce sur le boyau (62) en cours de remplissage ou rempli une force de freinage orientée dans le sens opposé au processus de remplissage.

16. Dispositif selon la revendication 15, **caractérisé en ce que** l'élément de support (86) est réglable radialement par rapport au tube de guidage (26), de telle sorte que la distance libre entre sa surface et l'axe médian (54) du tube de guidage (26) est inférieure au rayon intérieur du tube de guidage (26).

17. Dispositif selon la revendication 15 ou 16, **caractérisé en ce que** l'élément de support (86) est abouté directement à l'extrémité (28), libre dans le sens de remplissage, du tube de guidage (26).

18. Dispositif selon l'une quelconque des revendications 1 à 17, **caractérisé en ce que** le dispositif de tirage du boyau (24) est muni d'un frein pour boyau, connu en soi, et **en ce que** l'extrémité (30) du tube de guidage (26), orientée vers le dispositif de tirage du boyau (24), est conçue comme une partie du frein pour boyau.

19. Dispositif selon l'une quelconque des revendications 1 à 18, **caractérisé par** un dispositif de torsadage ou d'étranglement du boyau au niveau de l'extrémité du tube de guidage (26), contiguë au dispositif de tirage du boyau (24).

20. Dispositif selon l'une quelconque des revendications 1 à 18, **caractérisé en ce que** le tube de guidage (26) est agencé de manière rotative autour de son axe longitudinal et est muni d'un entraînement rotatif actionné par commande, destiné à former le dispositif de torsadage.
